**Europäisches Patentamt**

**European Patent Office**

**Office européen des brevets**

(19)

(11) Veröffentlichungsnummer: **0 302 048**
**B1**

(12) **EUROPÄISCHE PATENTSCHRIFT**

(45) Veröffentlichungstag der Patentschrift: **16.01.91**

(51) Int. Cl.⁵: **B 60 P 1/44**

(21) Anmeldenummer: **88890195.6**

(22) Anmeldetag: **22.07.88**

(54) **Hub- und Schwenkvorrichtung für eine Ladebordwand eines Lastfahrzeuges.**

(30) Priorität: **29.07.87 AT 1918/87**

(43) Veröffentlichungstag der Anmeldung:
**01.02.89 Patentblatt 89/05**

(45) Bekanntmachung des Hinweises auf die
Patenterteilung:
**16.01.91 Patentblatt 91/03**

(84) Benannte Vertragsstaaten:
**BE CH DE ES FR GB IT LI NL SE**

(56) Entgegenhaltungen:
**DE-B-2 352 991**
**US-A-3 084 815**
**US-A-4 079 988**

(73) Patentinhaber: **Weber, Günter**
**Hauptplatz 23**
**A-2474 Gattendorf (AT)**

(72) Erfinder: **Weber, Günter**
**Hauptplatz 23**
**A-2474 Gattendorf (AT)**

(74) Vertreter: **Holzer, Walter, Dipl.-Ing. et al**
**Patentanwälte, Dipl.-Ing. Dr.techn. Schütz**
**Alfred, Dipl.-Ing. Holzer Walter Dipl.-Ing. Pfeifer**
**Otto Fleischmanngasse 9**
**A-1040 Wien (AT)**

EP 0 302 048 B1

**Beschreibung**

Die Erfindung betrifft eine Hub- und Schwenkvorrichtung für eine Ladebordwand eines Lastfahrzeuges, mit einem am Fahrzeug montierbaren Träger für die Schwenklagerung eines an der Ladebordwand angelenkten Hubarmes, eines an der Ladebordwand mit Abstand von der Hubarmanlenkung angreifenden Parallelogrammlenkers und eines mit dem freien Ende des Hubarmes gelenkig verbundenen Druckmittel-Hubzylinders, wobei im Bereich der den Aulenkpunkt des Hubarmes am Träger einschließenden Hälfte des Hubarmes ein abgewinkelter Schwenkarm angelenkt ist, der mit der Ladebordwand schwenkbar verbunden ist und aus einer Stellung, in welcher er sich während des Hubvorganges mit einem Schenkel am Hubarm abstützt, beim Aufsetzen der Ladebordwand auf den Boden unter dem Gewicht derselben in eine vom Hubarm weggeschwenkte Stellung bewegbar ist.

Derartige, nach einem älteren Vorschlag ausgebildete Ladebordwände, die beim Aufsetzen auf den Boden nach vorne kippen und eine Auffahrrampe bilden, haben sich in der Praxis bewährt, doch besteht insbesondere bei höheren Ladebordwänden die Gefahr, daß die Ladebordwand beim Absenkvorgang, noch bevor sie auf den Boden aufgesetzt hat, unter einer außermittigen, insbesondere einer am äußeren Ende der Ladebordwand angeordneten Last ein Drehmoment auf das abgewinkelte Ende des Schwenkarmes ausübt, der dadurch aus seiner Anlage am Hubarm schwenken kann, wodurch die Abstützzwirkung des Hubarmes verloren gehen würde. Eine diese Gefahr vermindernde Vergrößerung des vorbestimmten Abstandes zwischen den beim Absenkvorgang übereinander liegenden Anlenkpunkten des Parallelogrammlenkers und des Schwenkarmes ist in der Praxis deshalb nicht möglich, weil ansonsten bei auf den Boden aufgesetzter Ladebordwand der beispielsweise 7° betragende Auffahrwinkel der Auffahrrampe zu groß wurde. Klinkenmechanismen für Zwecke der gesicherten Bewegung von Ladebordwänden sind z.B. aus US—A—3084815 bekannt.

Die Erfindung zielt nun darauf ab, eine Vorrichtung der einleitend angegebenen Art zu schaffen, die eine einwandfreie Anlage des Schwenkarmes am Hubarm während der gesamten Absenkbewegung der Ladebordwand sichert. Die erfindungsgemäße Konstruktion zeichnet sich dadurch aus, daß an der Anlenkstelle des Druckmittel-Hubzylinders am Hubarm eine Klinke schwenkbar gelagert ist, von der ein hakenförmiger Arm durch eine vorgespannte Feder mit einer Rastnase am Schwenkarm in Eingriff gehalten ist, und daß der Druckmittel-Hubzylinder eine Stellschraube trägt, die in der unteren Endstellung des Hubarmes als Anschlag für einen dem hakenförmigen Arm gegenüberliegenden Arm der Klinke dient und so die Klinke in eine Stellung verschwenkt, in welcher der hakenförmige Arm außer Eingriff mit der Rastnase des Schwenkarmes gelangt.

Auf diese Weise wird während der gesamten Absenkbewegung der Ladebordwand eine starre Verbindung zwischen dem Hubarm und dem Schwenkarm gesichert. Die Einstellung der Stellschraube wird so getroffen, daß die starre Verbindung erst unmittelbar vor dem Aufsetzen der Ladebordwand auf den Boden aufgehoben wird.

Gemäß einer bevorzugten Ausführungsform der Erfindung ist als Feder eine Zugfeder vorgesehen, die einerseits an dem mit der Stellschraube zusammenwirkenden Arm der Klinke und anderseits am Hubarm angreift.

Die Erfindung wird nachfolgend an einem Ausführungsbeispiel unter Bezugnahme auf die Zeichnungen näher erläutert. Es zeigen:

Fig. 1 eine Hub- und Schwenkvorrichtung für eine Ladebordwand nach einem älteren Vorschlag und

Fig. 2 eine Verriegelungsvorrichtung gemäß der Erfindung, die für die Vorrichtung nach Fig. 1 bestimmt ist.

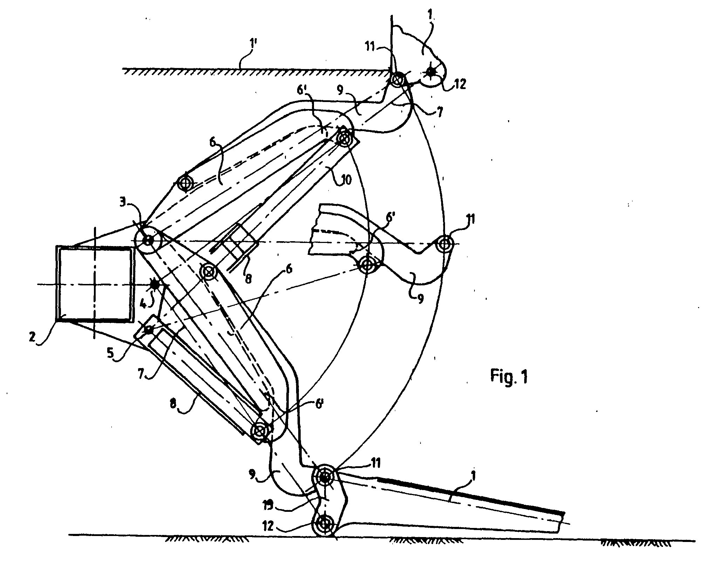

Die in Fig. 1 gezeigte Vorrichtung ist in drei verschiedenen Betriebsstellungen gezeigt. Die Vorrichtung ist an beiden Seiten einer Ladebordwand 1 eines Lastfahrzeuges mit Ladeplattform 1' vorgesehen und weist einen am Fahrzeug verankerten, sich quer zur Fahrzeuglängsachse erstreckenden Träger 2 aus einem Hohlprofil auf. Dieser Träger 2 hat drei Anlenkstellen 3, 4, 5, und zwar für einen Hubarm 6, der z.B. doppel-T-förmiges Profil hat, einen im einzelnen nicht dargestellten Parallelogrammlenker 7 und einen Druckmittel-Hubzylinder 8. Am Hubarm 6 sind einerseits ein abgewinkelter und gekröpfter Schwenkarm 9 und anderseits die Betätigungsstange 10 des Hubzylinders 8 angelenkt. Die Anlenkstelle des Schwenkarmes 9 liegt mit Abstand oberhalb der Längsmitte des Hubarmes 6, wogegen der Hubzylinder 8 am freien Ende des Hubarmes angreift. In der oberen Endstellung und während des Hubvorganges liegt der Schwenkarm 9 mit seinem mittleren Schenkel am Hubarm 6 an. Am freien Ende des Schwenkarmes 9 ist die Ladebordwand 1 bei 11 angelenkt. Die Ladebordwand 1 ist ferner bei 12 am Parallelogrammlenker 7 angelenkt. Die Anlenkstellen 3, 4, 11, 12 sind die vier Punkte eines Gelenkparallelogramms, mit welchem die Ladebordwand 1 beim Heben und Senken derselben geführt ist.

Während des Absenkens der Ladebordwand 1 wird die Ladebordwand an sich durch den Parallelogrammlenker 7 in horizontaler Lage gehalten, wobei der Schwenkarm 9 am Hubarm 6 anliegt. Um zu verhindern, daß die Ladebordwand um die Anlenkachse des Parallelogrammlenkers 7 dreht, wenn durch eine außermittige, insbesondere am äußeren Ende der Ladeplattform angeordnete Last ein Drehmoment auf den Schwenkarm 9 ausgeübt wird, das diesen aus der Anlage am Hubarm 6 schwenkt, ist erfindungsgemäß eine Verriegelungsvorrichtung zwischen dem Hubarm 6 und dem Schwenkarm 9 vorgesehen.

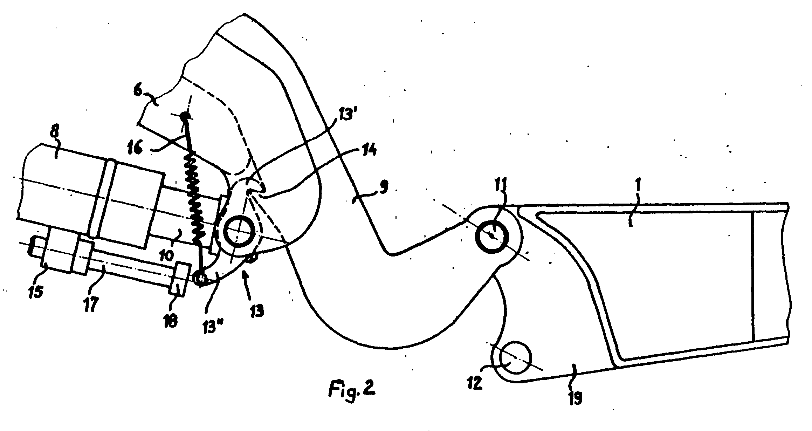

Gemäß Fig. 2 weist die Verriegelungsvorrichtung eine Klinke 13 auf, die zwei Arme hat und an der Anlenkstelle der Betätigungsstange 10 des Druckmittel-Hubzylinders 8 am Hubarm 6 scwenkbar gelagert ist. Der hakenförmige obere Arm 13' der Klinke greift von oben her in eine Rastnase 14 ein, die am abgewinkelten Abschnitt des Schwenkarmes 9 ausgebildet ist. Die Klinke 13 wird durch eine Zugfeder 16 in der Eingriffstellung gehalten, die am unteren Arm 13'' der Klinke und am Hubarm 6 angreift. Am Druckmittel-Hubzylinder 8 ist mittels eines Ansatzes bei 15 eine Stellschraube 17 montiert, deren Kopf 18 als Anschlag für den mit der Zugfeder 16 verbundenen unteren Arm 13'' der Klinke dient, wenn der Druckmittel-Hubzylinder 8 nahezu eingefahren ist, d.h. unmittelbar bevor die Ladebordwand 1 mit ihrem die Anlenkstellen 11 und 12 enthaltenden hinteren Abschlußteil 19 auf den Boden aufsetzt. Dadurch wird die Klinke 13 entriegelt und der Schwenkarm 9 freigegeben. Ferner wird der Hubzylinder 8 drucklos. In der Folge kippt die Ladebordwand 1 unter dem Eigengewicht bzw. unter der Last, bis sie mit ihrem vorderen Ende den Boden berührt (untere Stellung in Fig. 1), wobei der Schwenkarm 9 vom Hubarm 6 wegschwenkt. Die Ladebordwand 1 bildet nun eine Auffahrrampe.

## Patentansprüche

1. Hub- und Schwenkvorrichtung für eine Ladebordwand (1) eines Lastfahrzeuges, mit einem am Fahrzeug montierbaren Träger (2) für die Schwenklagerung eines an der Ladebordwand (1) angelenkten Hubarmes (6), eines an der Ladebordwand (1) mit Abstand von der Hubarmanlenkung angreifenden Parallelogrammlenkers (7) und eines mit dem freien Ende des Hubarmes (6) gelenkig verbundenen Druckmittel-Hubzylinders (8), wobei im Bereich der den Anlenkpunkt (3) des Hubarmes (6) am Träger (2) einschließenden Hälfte des Hubarmes (6) ein abgewinkelter Schwenkarm (9) angelenkt ist, der mit der Ladebordwand (1) schwenkbar verbunden ist und aus einer Stellung, in welcher er sich während des Hubvorganges mit einem Schenkel am Hubarm (6) abstützt, beim Aufsetzen der Ladebordwand (1) auf den Boden unter dem Gewicht derselben in eine vom Hubarm (6) weggeschwenkte Stellung bewegbar ist, dadurch gekennzeichnet, daß an der Anlenkstelle des Druckmittel-Hubzylinders (8) am Hubarm (6) eine Klinke (13) schwenkbar gelagert ist, von der ein hakenförmiger Arm (13') durch eine vorgespannte Feder (16) mit einer Rastnase (14) am Schwenkarm (9) in Eingriff gehalten ist, und daß der Druckmittel-Hubzylinder (8) eine Stellschraube (17) trägt, die in der unteren Endstellung des Hubarmes (6) als Anschlag für einen dem hakenförmigen Arm (13') gegenüberliegenden Arm (13'') der Klinke (13) dient und so die Klinke (13) in eine Stellung verschwenkt, in welcher der hakenförmige Arm (13') außer Eingriff mit der Rastnase (14) des Schwenkarmes (9) gelangt.

2. Vorrichtung nach Anspruch 1, dadurch gekennzeichnet, daß als Feder eine Zugfeder (16) vorgesehen ist, die einerseits an dem mit der Stellschraube (17) zusammenwirkenden Arm (13'') der Klinke (13) und anderseits am Hubarm (6) angreift.

## Revendications

1. Mécanisme de levage et de pivotement pour un haillon élévateur (1) de camion, comportant une poutre de support (2) pouvant être fixée sur le camion en vue du montage à pivotement d'un bras de levage (6) articulé au haillon élévateur (1), d'un parallélogramme articulé (7) attaquant le haillon élévateur (1) à distance de l'articulation du bras de levage et d'un vérin de levage à fluide sous pression (8) articulé à l'extrémité libre du bras de levage (6), dans lequel, dans la zone de la moitié du bras de levage (6) comprenant le point d'articulation (3) du bras de levage (6) à la poutre (2), est articulé un bras pivotant coudé (9) qui est relié à pivotement au haillon élévateur (1) et peut, lors de la pose du haillon élévateur (1) sur le sol, être déplacé, à partir d'une position dans laquelle, pendant l'opération de levage, il prend appui par une de ses branches sur le bras de levage (6), sous l'effet du poids du haillon, dans une position écartée par pivotement du bras de levage (6), caractérisé en ce qu'à l'endroit où le vérin de levage à fluide sous pression (8) est articulé au bras de levage (6), est monté à pivotement un cliquet (13) dont un bras crochu (13') est maintenu par un ressort prétendu (16) en prise avec un bec d'arrêt (14) prévu sur le bras pivotant (9), et que le vérin de levage à fluide sous pression (8) porte une vis de réglage (17) qui, dans la position d'extrémité inférieure du bras de levage (6), sert de butée pour un bras (13'') du cliquet (13) opposé au bras crochu (13') et fait ainsi pivoter le cliquet (13) dans une position dans laquelle le bras crochu (13') est dégagé du bec d'arrêt (14) du bras pivotant (9).

2. Mécanisme suivant la revendication 1, caractérisé en ce qu'en tant que ressort est prévu un ressort de traction (16), qui agit, d'une part, sur le bras (13'') du cliquet (13) coopérant avec la vis de réglage (17) et, d'autre part, sur le bras de levage (6).

## Claims

1. Lifting and swivelling arrangement for a loading tailgate (1) of a lorry, having a support (2), mountable on the vehicle, for the swivel mounting of a lifting arm (6) articulated on the loading tailgate (1), of a parallelogram link (7) engaging on the loading tailgate (1) at a distance from the lifting articulation and of a pressurized-fluid lifting cylinder (8) connected in articulated fashion to the free end of the lifting arm (6), an angled swivelling arm (9) being articulated in the region of that half of the lifting arm (6) which encloses the articulation point (3) of the lifting arm (6) on the support (2), which swivelling arm is swivellably connected to the loading tailgate (1) and can be moved under the weight of the loading tailgate (1), when the latter lands on the ground, out of a position in which, during the lifting procedure, it is supported by one limb against the lifting arm (6), into a position swivelled away from the lifting arm (6), characterized in that swivellably mounted on the lifting arm (6), at the articulation point of the pressurized-fluid lifting cylinder (8), is a pawl (13) a hook-shaped arm (13') of which is held in engagement with a catch projection (14) on the swivelling arm (9) by a prestressed spring (16), and in that the pressurized-fluid lifting cylinder (8) bears an adjusting screw (17) which, in the lower end position of the lifting arm (6) serves as stop for an arm (13'') of the pawl (13) situated opposite the hook-shaped arm (13') and thus swivels the pawl (13) into a position in which the hook-shaped arm (13') disengages from the catch projection (14) of the swivelling arm (9).

2. Arrangement according to Claim 1, characterized in that the spring provided is a tension spring (16) which engages, on the one hand, on that arm (13'') of the pawl (13) which cooperates with the adjusting screw (17) and, on the other hand, on the lifting arm (6).

Fig. 1

1

Fig. 2

2